**Europäisches Patentamt**

**European Patent Office**

**Office européen des brevets**

(19)

(11) Veröffentlichungsnummer : **0 026 382**
**B1**

(12) **EUROPÄISCHE PATENTSCHRIFT**

(45) Veröffentlichungstag der Patentschrift :
24.08.83

(21) Anmeldenummer : **80105485.9**

(22) Anmeldetag : **12.09.80**

(51) Int. Cl.³ : **G 09 G 1/02**, G 06 F 3/037

(54) Verfahren zur Lokalisierung von Bereichen bei gemischter Text-/Bildbearbeitung am Bildschirm.

(30) Priorität : **28.09.79 DE 2939489**

(43) Veröffentlichungstag der Anmeldung :
**08.04.81 Patentblatt 81/14**

(45) Bekanntmachung des Hinweises auf die Patenterteilung : **24.08.83 Patentblatt 83/34**

(84) Benannte Vertragsstaaten :
**AT BE CH FR GB IT LI LU NL**

(56) Entgegenhaltungen :
**DE A 1 901 813**
**DE A 2 439 053**
**US A 3 659 281**

**IBM TECHNICAL DISCLOSURE BULLETIN, Band
22, Nr. 5, Oktober 1979, New York, US, I.D. JUDD
et al. : « Microprocessor controlled cursors »,
Seiten 2103-2105**

(73) Patentinhaber : **SIEMENS AKTIENGESELLSCHAFT**
**Berlin und München Wittelsbacherplatz 2**
**D-8000 München 2 (DE)**

(72) Erfinder : **Woborschil, Walter, Dipl.-Ing.**
**Gleichweg 26**
**D-8000 München 50 (DE)**

## Verfahren zur Lokalisierung von Bereichen bei gemischter Text-/Bildbearbeitung am Bildschirm

Die vorliegende Erfindung betrifft ein Verfahren zur Lokalisierung von Bereichen bei gemischter Text-/Bildbearbeitung am Bildschirm für Anwendungsfälle, bei denen der Bildschirm die zu bearbeitende Information mit zwei Helligkeitsstufen darstellt und bei dem ein Cursor als Hilfsmittel für die Lokalisierung verwendet wird.

Zur Bearbeitung gemischter Text-Bildvorlagen mit Hilfe eines Bildschirms oder Displays müssen dem Bearbeiter Hilfsmittel zur Verfügung gestellt werden, die eine Lokalisierung sowohl von Textals auch von Bildelementen ermöglichen. Bei der Textbearbeitung ist ein solches Hilfsmittel als Cursor, meist in der Gestalt eines Rechteckes bekannt. Ferner besteht das Problem der Zuordnung der Fläche eines Tableaus oder ähnlicher Geräte zur manuellen punktweisen oder vektoriellen Eingabe von z. B. Handschrift, Skizzen usw., die nicht die gesamte Bearbeitungsfläche abdecken, zur Bearbeitungsvorlage am Display.

Allgemein versteht man unter einem Cursor eine Markierung auf Bildschirmen, die dem Benutzer rein optisch eine momentan wichtige Bildstelle hervorhebt. Es ist dies bei Datensichtgeräten z. B. ein Strich oder eine hellere Fläche beim nächsten zu bearbeitenden Zeichen, bei Logikanalysatoren zumeist eine Linie — im Zeitdiagramm — zur Kennzeichnung der näher untersuchten Adresse des Speicherbereiches ; vgl. « ELEKTRONIK » 1978, H. 5, Karteikarte Nr. 403.

Aus DE-A-2 439 053 ist ein Verfahren zum Lokalisieren von Bereichen eines auf einem Bildschirm sichtbar gemachten Textes bekannt, bei dem der zu lokalisierende Bereich durch einen als rechteckige Fläche realisierten Cursor bei sichtbar bleibender Information heller als die normalerweise dargestellte Information getastet wird. Die Größe des Cursors ist dabei gleich der der Größe des betreffenden Textzeichens.

Der Erfindung liegt die Aufgabe zugrunde, eine bisher nicht bekannte Form eines Cursors zu schaffen, mit dessen Hilfe eine einfache und wirkungsvolle Lokalisierung von einzelnen Punkten, von Flächen oder von Textzeichen ermöglicht ist. Dabei soll der vorgeschlagenen Cursor unabhängig von der dargestellten Information gut erkennbar sein.

Die Erfindung geht aus von einem Verfahren zur Lokalisierung von Bereichen bei gemischter Text-/Bildbearbeitung am Bildschirm für Anwendungsfälle, bei denen der Bildschirm die zu bearbeitende Information mit zwei Helligkeitsstufen darstellt und bei dem ein Cursor als Hilfsmittel für die Lokalisierung verwendet wird, wobei der zu lokalisierende Bereich durch einen als beispielsweise rechteckige Fläche realisierten Cursor bei sichtbar bleibender Information heller oder dunkler als die normalerweise dargestellte Information getastet wird, wozu die Größe dieser Fläche von der jeweils momentanen Funktion des Cursors abhängig steuerbar ist, derart, daß der Cursor zum Lokalisieren einer Fläche die Größe dieser Fläche annimmt, und wobei der Cursor zum Lokalisieren eines Textzeichens die Größe dieses Textzeichens annimmt.

Das erfindungsgemäße Verfahren ist dadurch gekennzeichnet, daß der Cursor zur Positionierung eines Punktes unter schrittweiser Verkleinerung seiner Fläche, sich auf den betreffenden Punkt zu bewegend, pulsiert.

Die Erfindung bietet den Vorteil, daß ein sowohl für die Lokalisierung von beliebigen Bereichen als auch Textzeichen oder Punkten geeigneter Cursor, der die zu lokalisierende Bildflächen durch Aufhellen oder Abdunkeln hervorhebt, derart, daß die hervorzuhebende Bildinformation jeweils sichtbar bleibt, zur Verfügung steht.

Weiterbildungen der Erfindung sind durch die in den Unteransprüchen angegebenen Merkmale gekennzeichnet.

Im folgenden wird die Erfindung anhand mehrerer, Ausführungsbeispiele für die Erfindung betreffender Figuren erläutert.

Figur 1 zeigt schematisch einen Cursor, dessen Flächen der Größe der Fläche eines Bildbereiches entspricht, der lokalisiert werden soll.

Figur 2 zeigt schematisch einen Cursor mit einer Fläche, die der Fläche eines zur lokalisierenden Textzeichens entspricht.

Figur 3 zeigt schematisch das Prinzip, mittels dessen ein Cursor unter schrittweiser Verkleinerung seiner Flächen zu einem zu lokalisierenden Punkt hin pulsiert.

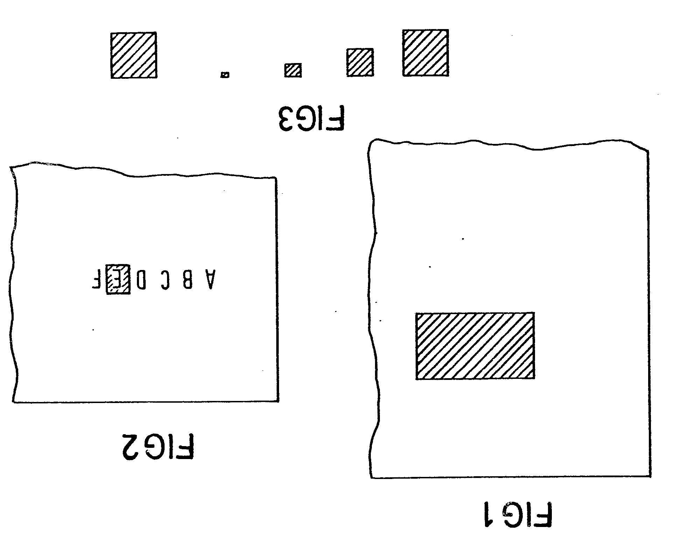

Zur Darstellung einer einen zu lokalisierenden Bereich bedeckenden Fläche kann eine Größenbestimmung für die Fläche derart getroffen werden, daß in einem ersten Schritt im Punktmodus, nämlich unter Bewegen des Cursors auf einen gewünschten Punkt des Bildschirms zu, beispielsweise mittels Cursor-Steuertasten oder mittels eines sog. Joysticks für den Fall, daß die Cursorfläche ein Rechteck darstellt, die linke obere Ecke und in einem zweiten Schritt die rechte untere Ecke der die Fläche betreffenden Cursorfläche definiert wird. Während dieses Positioniervorganges wird die aktuell begrenzte Fläche interaktiv, nämlich in direkter Wechselwirkung mit Manipulationen durch den Benutzer, angezeigt.

Für den Fall, daß ein Eingabegerät nur einen Teil der auf dem Bildschirm dargestellten Bewertungsfläche, beispielsweise eine DIN-A4-Seite abdeckt, wird zweckmäßigerweise zunächst eine Marke, beispielsweise an einer Kante eines dargestellten Buchstabens, mit dem Cursor mittels des Punktmodus auf der Bildschirmfläche positioniert. Danach wird die auf dem Eingabegerät zur Verfügung stehende Fläche im Flächenmodus, nämlich durch Darstellung des Cursors als Fläche, auf dem Bildschirm mittels dieser positionierten Marke dargestellt.

Die Cursorfläche kann auch gemäß der vorliegenden Erfindung eine beliebige Form, beispielsweise eine Dreieckform oder Pfeilform haben.

## Ansprüche

1. Verfahren zur Lokalisierung von Bereichen bei gemischter Text-/Bildbearbeitung am Bildschirm, für Anwendungsfälle, bei denen der Bildschirm die zu bearbeitende Information mit zwei Helligkeitsstufen darstellt und bei dem ein Cursor als Hilfsmittel für die Lokalisierung verwendet wird, wobei der zu lokalisierende Bereich durch einen als beispielsweise rechteckige Fläche realisierten Cursor bei sichtbar bleibender Information heller oder dunkler als die normalerweise dargestellte Information getastet wird, wozu die Größe dieser Fläche von der jeweils momentanen Funktion des Cursors abhängig steuerbar ist, derart, daß der Cursor zum Lokalisieren einer Fläche die Größe dieser Fläche annimmt, und wobei der Cursor zum Lokalisieren eines Textzeichens die Größe dieses Textzeichens annimmt, dadurch gekennzeichnet, daß der Cursor zur Positionierung eines Punktes unter schrittweiser Verkleinerung seiner Fläche, sich auf den betreffenden Punkt zu bewegend, pulsiert.

2. Verfahren nach Anspruch 1, dadurch gekennzeichnet, daß zur Darstellung einer einen zu lokalisierenden Bereich bedeckenden Fläche eine Größenbestimmung für die Fläche derart getroffen wird, daß in einem ersten Schritt im Punktmodus, nämlich unter Bewegen des Cursors auf einen gewünschten Punkt des Bildschirms zu, beispielsweise mittels Cursor-Steuertasten oder mittels eines sog. Joysticks für den Fall, daß die Cursorfläche ein Rechteck darstellt, die linke obere Ecke und in einem zweiten Schritt die rechte untere Ecke der die Fläche betreffenden Cursorfläche definiert wird und daß während dieses Positioniervorganges die aktuell begrenzte Fläche interaktiv, nämlich in direkter Wechselwirkung mit Manipulationen durch den Benutzer, angezeigt wird.

3. Verfahren nach Anspruch 1 oder 2, dadurch gekennzeichnet, daß für den Fall, daß ein Eingabegerät nur einen Teil der auf dem Bildschirm dargestellten Bewertungsfläche, beispielsweise eine DIN-A4-Seite abdeckt, zunächst eine Marke, beispielsweise an einer Kante eines dargestellten Buchstabens, mit dem Cursor mittels des Punktmodus auf der Bildschirmfläche positioniert wird und daß danach die auf dem Eingabegerät zur Verfügung stehende Fläche im Flächenmodus, nämlich durch Darstellung des Cursors als Fläche, auf dem Bildschirm mittels dieser positionierten Marke dargestellt wird.

## Claims

1. Method for the localisation of zones during mixed text/image processing on a screen, for applications in which the screen shows the item of information which is to be processed in two brightness levels, and wherein a cursor is used to assist the localisation, where the zone to be localised is scanned by a cursor, which consists for example of a rectangular area, to be brighter or darker than the normally shown information so that the information remains visible, for which purpose the size of this area can be controlled in dependence upon the instantaneous function of the cursor in such manner that in order to localise an area the cursor assumes the size of this area, and where in order to localise a text symbol the cursor assumes the size of this text symbol, characterised in that in order to position a spot the cursor moves in pulsating fashion towards the spot in question while reducing the size of its area in stepped fashion.

2. Method as claimed in claim 1, characterised in that in order that an area covering the zone to be localised may be shown, the size of the area is determined in that in a first step, in the spot mod i. e. moving the cursor towards a desired spot the screen for example by means of cur control scanning or by means of a so-ca' joystick in the event that the cursor area cor tutes a rectangle, the left-hand upper corner, & in a second step the right-hand lower corner, the cursor area relating to the area is defined, an that during this positioning operation the area delimited at this moment in time is displayed interactively, namely in direct interaction with manipulation by the user.

3. Method as claimed in claim 1 or 2, characterised in that in the event that an input device covers only a part of the evaluation area shown on the screen, for example a DIN A4 page, initially a mark — for example at one edge of a displayed letter — is positioned on the screen surface by the cursor using the spot mode, and that then the area available on the input device is shown on the screen by means of this positioned mark in the area mode, namely by showing the cursor as an area.

## Revendications

1. Procédé pour la localisation de zones dans le cas d'un traitement mixte de textes et d'images sur l'écran, pour des applications dans lesquelles l'écran représente les informations à traiter avec deux niveaux de luminosité, et suivant lequel on utilise un curseur comme moyen auxiliaire pour la localisation, la zone à localiser étant cernée au moyen d'un curseur, se présentant par exemple sous la forme d'une surface rectangulaire, plus clair ou plus foncé que l'information représentée normalement dans le cas où les informations restent visibles, la grandeur de cette surface pouvant être commandée suivant la fonction momentanée du curseur de manière que pour localiser une surface le curseur prenne les dimensions de cette surface, et que pour localiser un caractère de texte il prenne les dimensions de ce caractère de texte, caractérisé par le fait que pour localiser un point le curseur varie de façon

puisée, en diminuant de surface par paliers, en se déplaçant jusqu'au point concerné.

2. Procédé suivant la revendication 1, caractérisé par le fait que pour représenter une surface recouvrant une zone à localiser, on détermine les dimensions de la surface de manière à définir, dans une première phase en mode ponctuel, à savoir en déplaçant le curseur jusqu'à un point souhaité de l'écran, par exemple au moyen de touches de commande du curseur ou au moyen d'un système dit « Jostick » dans le cas où la surface du curseur représente un rectangle, le coin supérieur gauche et, dans une seconde phase, le coin supérieur droit de la surface du curseur qui a trait à ladite surface, et que pendant ce processus de positionnement, l'opérateur affiche de façon interactive, à savoir par action alternée directe avec manipulations, la surface limitée en réalité.

3. Procédé suivant l'une des revendications 1 ou 2, caractérisé par le fait que pour le cas où un appareil d'introduction ne couvre qu'une partie de la surface d'évaluation représentée sur l'écran, par exemple une feuille A4 suivant la norme DIN, on positionne tout d'abord un repère, par exemple sur un bord d'une lettre représentée, sur la surface de l'écran, à l'aide du curseur, au moyen du mode ponctuel, et qu'ensuite on représente sur l'écran la surface qui est disponible sur l'appareil d'introduction, en mode de surface, à savoir par représentation du curseur sous forme d'une surface, au moyen de ce repère positionné.

FIG 1

FIG 2

A B C D E F

FIG 3